(19) **Europäisches Patentamt**
**European Patent Office**
**Office européen des brevets**

(11) **EP 2 021 624 B1**

(12) **EUROPEAN PATENT SPECIFICATION**

(45) Date of publication and mention
of the grant of the patent:
**18.02.2015 Bulletin 2015/08**

(51) Int Cl.:
***F03D 5/00*** *(2006.01)*     ***F03D 5/06*** *(2006.01)*
***F03D 11/04*** *(2006.01)*

(21) Application number: **07736828.0**

(86) International application number:
**PCT/IT2007/000325**

(22) Date of filing: **03.05.2007**

(87) International publication number:
**WO 2007/135701 (29.11.2007 Gazette 2007/48)**

(54) **AUTOMATIC CONTROL SYSTEM AND PROCESS FOR THE FLIGHT OF KITES**

AUTOMATISCHES STEUERSYSTEM UND -VERFAHREN FÜR DRACHENFLUG

SYSTÈME DE COMMANDE AUTOMATIQUE ET PROCÉDÉ DESTINÉ À FAIRE VOLER DES CERFS-
VOLANTS

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **23.05.2006 IT TO20060372**

(43) Date of publication of application:
**11.02.2009 Bulletin 2009/07**

(73) Proprietor: **Kite Gen Research S.R.L.**
**20145 Milano (IT)**

(72) Inventors:
• **MILANESE, Mario**
**10138 Torino (IT)**

• **IPPOLITO, Massimo**
**10023 Chieri (TO) (IT)**

(74) Representative: **Garavelli, Paolo**
**A.BRE.MAR. S.R.L.**
**Via Servais 27**
**10146 Torino (IT)**

(56) References cited:
**US-A- 5 533 694     US-A- 5 646 343
US-A- 5 931 416     US-A1- 2002 040 948
US-B1- 6 254 034**

**Description**

The present invention refers to an automatic control system and process for the flight of kites, in particular for optimising the conversion of wind energy into electric or mechanical energy through the flight of kites connected through cables to ground conversion devices.

In fact, from some prior patents, conversion processes are known from wind energy into electric or mechanical energy through devices that are able to convert the mechanical energy generated by the wind source into another form of energy, typically electric energy, that subtract the wind energy to the wind by using power wing profiles (generically designated with the term "kite") connected thereto through cables. In particular, IT-A-TO2003A000945 and EP-A-04028646.0, that claims the priority from the former, in the name of Ippolito Massimo, disclose a system for converting the kinetic energy of wind currents into electric energy through the control of flight of kites connected to a system of the "carrousel" type. In such system, it would be desirable to use an automatic control system and process for the flight of used kites, that allow real-time driving the kites themselves according to the modes disclosed in the above patents. In the current art, however, no systems are known that allow controlling the flight of kites used in the "carrousel" type system in an efficient way.

Systems are also known (such as those disclosed in US-B1-6254034, US 2002/040948 A1 and US-A-5931416) for converting the kinetic energy of wind currents into electric energy, in which at least one kite is connected through cables to a ground-fixed driving and energy-generating unit: in such, systems, the kite is cyclically taken through a traction step in which it ascends, pushed by the wind, and during which the unwinding cables rotate a generator of the ground unit adapted to generate electric energy, and a recovering step in which the kite is recovered and afterwards driven in order to capture again the wind. Also in these cases, the art does not propose systems that efficiently allow the control of the flight of kites in order to guarantee the optimisation of electric energy production, and in particular to maximise the mechanical energy transmitted to ground through cables.

In the past, different arrangements have also been proposed, related to the dragging of boats by means of devices that capture the wind currents through kites, like those described in particular in GB-A-2,098,951, US-A-5,056,447, in US-A-5,435,259, in WO-A-03097448, in US-A-2004035345, in US-A-2004200396, in WO-A-2005100147, in WO-A-2005100148, in WO-A-2005100149, and in DE-A-102004018814.

Also in these cases, anyway, in the current art no systems and/or processes are known that allow controlling the flight of kites used for propelling boats in an efficient way.

In any case, anyway, the implementation, on board the above cited conversion systems, of classical predictive control algorithms based on kite flight dynamics models for providing an automatic control of the flight of kites, would require a computing complexity and overhead that are ill suited with the needs of using small computing processors, with acceptable costs, and of providing real-time command instructions.

Therefore, object of the present invention is solving the above prior art problems by providing an automatic control system and process for the flight of kites that efficiently allow optimising the conversion of wind energy into electric or mechanical energy and/or maximising the energy transmitted to ground by kites themselves through cables.

Another object of the present invention is providing an automatic control process of the flight of kites that allows an efficient and computationally compatible implementation with the need of a real-time control, of predictive control algorithms based on a kite flight dynamics model.

The above and other objects and advantages of the invention, as will result from the following description, are obtained by an automatic control process for the flight of kites as claimed in claim 1.

Moreover, the above and other objects and advantages of the invention are obtained with an automatic control system for the flight of kites as claimed in claim 5.

Preferred embodiments and non-trivial variations of the present invention are the subject matter of the dependent claims.

The present invention will be better described by some preferred embodiments thereof, provided as a nonlimiting example, with reference to the enclosed drawings, in which:

- FIG. 1 shows a block diagram displaying the main components of the automatic control system for the flight of kites according to the present invention;
- FIG. 2 shows a top view of the known "carrousel" system in some steps of the flight of a kite; and
- FIG. 3 shows a diagram displaying a reference system in spherical coordinates related to a kite constrained to an actuation unit moving along an assigned trajectory.

In the following description, it will be assumed that the flight of at least one kite 2 is driven by at least one driving unit 4 equipped with alternately motored winches to which the kite itself is connected through driving cables 6, like the one substantially disclosed in IT-A-TO2003A00094 and in EP-A-04028646.0. Consequently, due to obvious briefness issues, for a detailed description of the components that will be mentioned below and common with the "carrousel" system,

reference must be made to the above patents. It is anyway wholly evident, as will clearly appear from the following description, that the system and process according to the present invention can be used also for other applications, different from the "carousel" system, by performing modifications within the reach of any skilled person in the art.

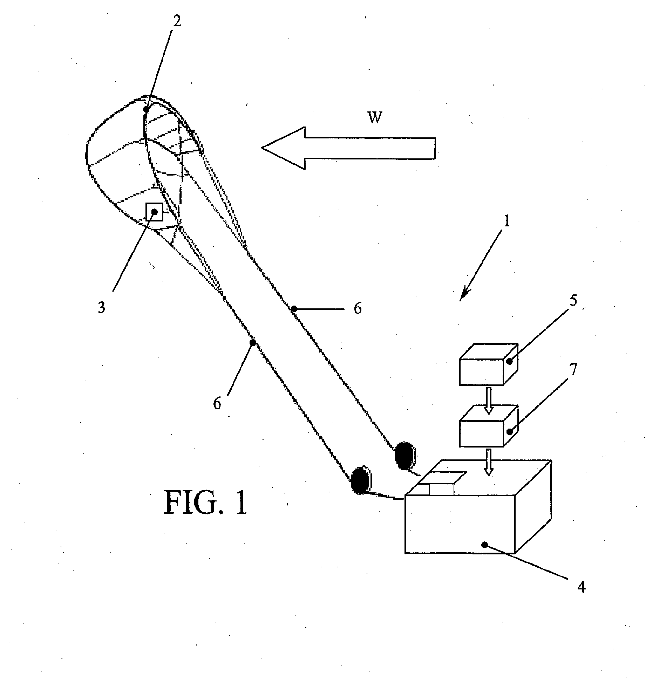

With reference therefore to FIG. 1, it is possible to note that the automatic control system 1 for the flight of at least one kite 2 according to the present invention comprises:

- first detecting means 3 on board the kite 2, adapted to detect first pieces of information regarding at least the position and orientation in the space of the kite 2 itself and tri-axial accelerations to which it is subjected;
- second detecting means 5 on the ground adapted to detect second pieces of information regarding at least the amount of tension on driving cables of the kite 2 and their relative position, direction and intensity of the wind current W inside which the kite 2 is immersed, and possibly position and movements of the driving unit 4 along a movement trajectory thereof;
- processing and controlling means 7 of the first and second pieces of information, adapted to transform the contents of such information into a mechanical command operating on the winches of the driving unit 4 for driving the kite 2 along a flight trajectory that maximises the amount of kinetic energy subtracted from the wind current W. In general, the processing and controlling means 7 receive as input the signals generated by the first 3 and second 5 detecting means that respectively detect the first and second pieces of information substantially representing the various parameters P characterising the operating conditions of the "dynamics system of the flight of kites" and the wind conditions and perform a control function U of the kite 2 that is transformed into the mechanical command to be transmitted to the driving unit 4. Herein below, it will be assumed that such function U will be mainly performed through the differential control of the position of cables 6 that control the kite 2. In any case, the specific construction details for performing the control are not per se necessary for the arrangement described herein. The skilled people in the art will comprise that such processing task can easily be performed, within the processing and controlling means 7, both by a dedicated processor (of any known type), and by a general-purpose programmed processor (according to criteria known per se) with a corresponding information product;
- a transmitting system, of the first pieces of information to the processing and controlling means 7.

Preferably, in order to deduce position and orientation of a kite 2 in the space and accelerations to which it is subjected, the first detecting means 3 comprises tri-axial accelerometers of the MEMS type in combination with at least one electronic compass, this latter one made, for example, with a magnetometer, of the Fluxgate type or another type. In particular, the kite 2 is equipped with at least one magnetometer and at least two tri-axial accelerometers placed at the ends of the kite 2, preferably next to the junction with the driving cables 6.

As stated, the second detecting means 5, among other things, are adapted to detect the second pieces of information 5a dealing at least with the amount of tension on the driving cables 6 of the kite 2 and their relative position, real or emulated by the driving unit 4 winches. The second detecting means 5 can therefore comprise strain gauges for measuring the deflection of the driving cables and encoders on the driving unit winches; such encoders, possibly associated with an alternator-motor, can also be used for detecting the length of the driving cable 6 unwound from the winches, and consequently the distance of the kite 2 from the driving unit 4, and the differential length between the two driving cables 6 of a same kite 2. Moreover, the second detecting means 5 comprise at least one anemometer and at least one anemoscope adapted to detect, respectively, amount and direction of the wind current W.

Moreover, the second detecting means 5 can also comprise the ground viewing system, of the optical or microwave type, for the kite position.

The transmitting system of the first pieces of information between kite 2 and processing and controlling means 7 can obviously be realised with different technologies, such as for example through optical fibres, wireless transmission, etc.

As stated in the preamble of the description, the system and process according to the present invention can advantageously be applied to the two different known modes for converting the wind energy.

In a first mode, the driving unit is secured with respect to the ground. The energy generation therefore occurs through the periodic execution of cycles composed of two main steps, designated as traction and recovery steps. The driving unit winds and releases the cables through the winches actuated by two electric actuators, driven by the processing and controlling means, that can operate both as motors and as generators. In the traction step, the control is designed so that the kite, starting from a minimum assigned cable length, extends its width, so that the electric actuators are rotated through the winches, generating electric energy. When the cables reach their maximum length, the recovery step starts, in which the kite is driven in an area from which the cables can be recovered by the electric actuators consuming a small fraction of the energy generated during the traction step. When the cables reach the preset minimum length, the recovery step starts again. The system according to the present invention allows maximising the energy generated in the traction step and minimising the energy consumed for recovering the kite.

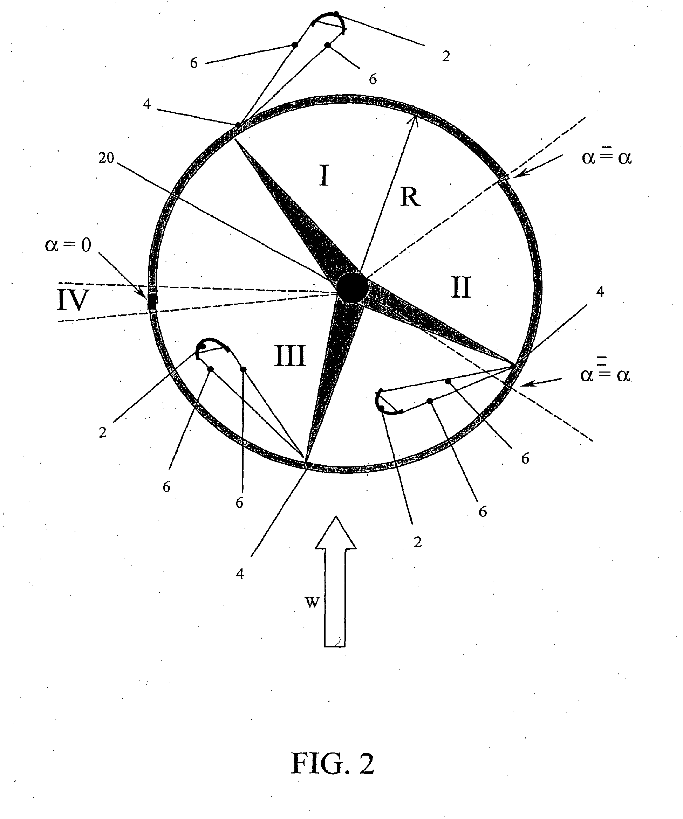

In a second mode, the driving unit is able to move with respect to the ground along a known trajectory and energy is generated by transmitting this movement to an electro-mechanical actuator. As an example, a circular trajectory is taken into account herein, like the one that can be realised in the configuration in which the kites are used together with the "carousel" system 20. The process provides for the periodic execution of cycles composed of four steps, graphically shown in FIG. 2 as step I of traction with right walls, step II of traction suspension and wall change II, step III of traction with left walls, and step IV of wall change. Such steps are located depending on an angle $\alpha$ that points out the driving unit 4 position on the circular diagram, related to the wind current W direction. It is assumed that the "carousel" 20 motion occurs clockwise and angles are deemed as positive along this direction. It is moreover taken into account that the electric generator moved by the "carousel" 20 is controlled with a suitable adjusting system so that the rotation speed $\dot\alpha = \dot\alpha^{ref}$ is constant. The traction step with right walls starts for $\alpha = 0$ and the system according to the present invention allows that the kite 2 impresses a clockwise rotation to the "carousel" 20, maximising the power that can be obtained in the different positions of the trajectory. This step ends for $\alpha=\overline\alpha$, angle in which the kite 2 is not able any more to provide a positive moment. Then, the step of traction suspension and wall change starts. During this step, the kite 2 is not able to produce energy till the following angle $\alpha=\overline{\overline\alpha}$ in which the step of traction with left walls starts.

Therefore, the system according to the present invention drives the kite 2 to an area in which it offers its minimum resistance and next to the angle $\alpha=\overline{\overline\alpha}$ it performs the wall change, for operating the transition to the following step of traction with left walls. In this step, the kite 2 is again able to impress a positive clockwise moment to the "carousel" 20 and the system according to the present invention allows maximising the power that can be obtained in the different positions of the trajectory, till $\alpha=0$. Now the step of right walls change is performed, minimising the energy required for such operation and the cycle can start again from a step of traction with right walls.

The present invention moreover refers to an automatic control process for the flight of kites, in particular aimed to optimise the conversion of wind energy into electric or mechanical energy through a system like the previously described one, using parameters P characterising the operating conditions of the "dynamics system of the flight of kites" and the wind conditions and performing a control function U of the kite. In particular, the process according to the present invention performs the kite control by using a Model Predictive Control (MPC) methodology based on a kite flight dynamics model expressed with discrete time equations, described, for an assigned sampling period $\Delta t$, as:

$$x_{t+1} = g(x_t, u_t, W_t, v_t^{ref})$$

$$F_t = h(x_t, u_t)$$

where:

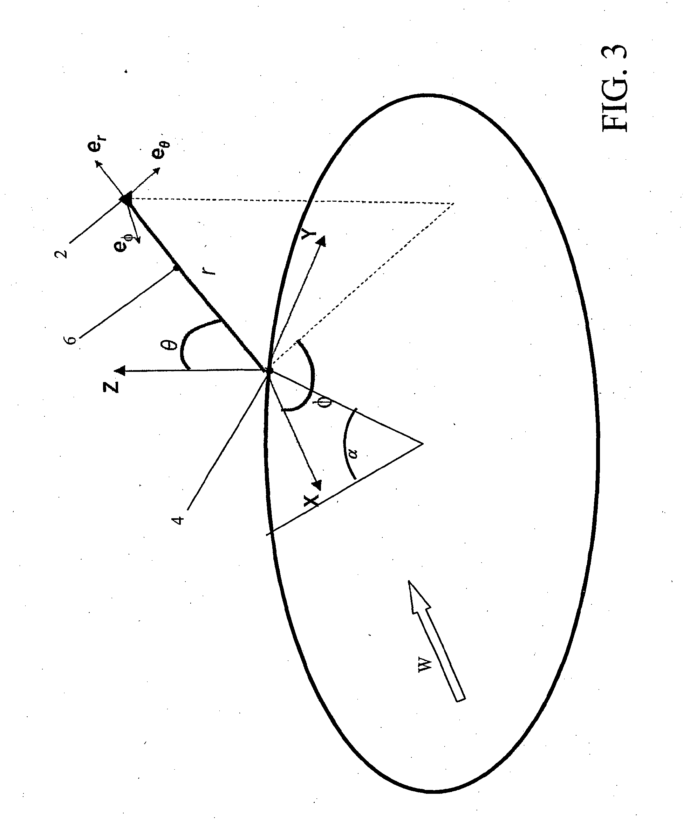

- $W_t$ is a vector of wind speed or wind current W whose values are detected by the detecting means of the system according to the present invention and transmitted to the processing and controlling means;
- $V^{ref}_t$ is an assigned design function described below;
- $u_t$ is the effective control action defined at time t by the process according to the present invention;
- $x_t =[\vartheta_t\ \phi_t\ r_t\ \Delta\vartheta_t\ \Delta\phi_t\ \Delta r_t\ s_t\ \Delta s_t]$ is a status vector composed, at time t, of positions and position variations of the kite 2 barycentre, expressed in spherical coordinates, as shown in FIG. 3 for a reference system integral with the driving unit 4, and of positions and position variations of the driving unit 4 in curvilinear coordinates on the movement trajectory T being taken into account (supposed as an example as circular) detected by the detecting means of the system according to the present invention and transmitted to the processing and controlling means; and
- $F_t$ is the useful force transmitted by the cables for generating energy.

As already stated, the energy generation provides for the periodic execution of cycles composed of different steps. The energy generation occurs in some of these steps, during which the task of the process, operating through the system according to the present invention, is the maximisation of generated useful energy. The other steps are used for performing transitions from one useful step to the other and purpose of the system and process according to the present invention is performing such transitions by minimising the required energy.

In each one of these steps, the control is computed with the MPC technique, that provides for minimising, at every sampling time, a cost function J that defines the control objectives for every single step. Such minimisation must moreover be,subjected to conditions on control and status variables that define the constraints which these variables must necessarily satisfy (for example that the kite height from ground must be positive or that the control variable and its rate of change in time cannot, due to physical limitations, be greater than assigned values).

By defining the prediction horizon as $N_p$ and the control horizon as $N_c \leq N_p$, the cost function J can be expressed as:

$$J\left(U, x_{t|t}, N_p, N_c\right) = \sum_{k=0}^{N_p-1} L(x_{t+k|t}, u_{t+k|t}, W_{t+k}, v_{t+k}^{ref})$$

where:

$x_{t+k|t}$ designates the status predicted by the model, given the input sequence $u_{t|t},...,u_{t+k-1|t}$ and the "initial" status, $x_{t|t} = x_t$, $U=[u_{t|t}, u_{t+1},...,u_{t+N_c-1|t}]^T$ is the control sequence to be optimised and L is a suitably defined function to represent the control objectives of the specific step being examined. If $N_c < N_p$, the following choice is made:

$$u_{t+k|t} = u_{t+N_c-1|t}, k = N_c, N_c +1,..., N_p -1 \ .$$

The constraints are expressed for every specific operating step by disequations of the form:

$$Fx_{t+k} + Gu_{t+k} \leq H, k = 0,..., N_p - 1$$

where the F, G and H matrixes point out the constraint conditions.
By applying the predictive control algorithm in a classic form thereof, the control law for every single operating step would be obtained by applying the following "receding-horizon" strategy:

1. upon instant $t$, obtain $x_t$ ;
2. solve the optimisation problem:

$$\min_U J\left(U, x_{t|t}, N_p, N_c\right)$$

subjected to the previously stated conditions;
3. apply the first element of the sequence of solution $U$ of the optimisation problem as actual control action:

$$u_t = u_{t|t} \ ;$$

4. repeat the whole procedure at time $t$+1.

For every single step of one of the two described generation modes, suitable choices are used of the cost function J and the matrixes F, G and H that point out the constraint conditions.
As an example, possible choices are included for the first above mentioned energy generation mode. In this mode, the useful force" $F_t$ is the cable traction force. Moreover, since the driving unit is fixed, $\alpha = 0$, $\dot{\alpha} = 0$ and therefore these two variables do not appear in the model equations. Let $\underline{r}$ and $\overline{r}$ be the minimum and maximum cable lengths during the flight steps. It must be taken into account that the wind is along direction X. The constraint conditions are the same for both traction and recovery steps, for example:

$$\vartheta_t \le \overline{\vartheta} < \pi/2$$

$$|u_t| \le \overline{u}, \quad |u_t - u_{t-1}| \le \Delta$$

The first condition shows that, during the flight, the kite must not excessively approach the ground. The second condition shows that the differential control of the cable position due to physical reasons cannot be greater than assigned values, both as absolute value and as variation between a sampling time and another.

The traction step starts with the kite in an assigned starting position $\vartheta = \vartheta_I, \phi = 0, r = \underline{r}$. During this step, the control provides that the kite exerts a traction force F on cables, extending their length, so that the electric actuators are dragged by the winches generating electric energy. The system 1 actuators can obviously be controlled by a suitable adjusting system so that the unwinding rate is constant and therefore $\dot{r} = \overline{v}^{ref}$, with assigned $\overline{v}^{ref} > 0$. As cost function, in this traction step, the following is used:

$$J\left(U, x_{t|t}, N_p, N_c\right) = -\sum_{k=0}^{N_p-1} \Delta r_{t+k} F_{t+k}$$

whose minimisation brings about a maximisation of electric energy generated during the prediction interval.

The traction step ends when the cables reach their maximum length, namely $r = \overline{r}$, condition from which the recovery step starts. The objective in this step is taking back the kite to the initial position $\vartheta = \vartheta_I$, $\phi = 0$, $r = \underline{r}$, from which a new traction step can be started, consuming the minimum amount of energy. This is obtained by actuating three sub-steps. In the first sub-step, $v_t^{ref} = \overline{v}^{ref} e^{-\lambda t}, \lambda > 0$ is chosen and:

$$J\left(U, x_{t|t}, N_p, N_c\right) = \sum_{k=0}^{N_p-1} [\vartheta_{t+k}^2 + (|\phi_{t+k}| - \pi/2)^2]$$

The minimisation of this function is the same as taking the kite to an area where $\vartheta$ is small and $\phi$ is near $\pi/2$, area from which it is possible to recover the cables with a small energy consumption. This first recovery sub-step ends when J has reached a "small enough" value, and the second sub-step starts, in which the cable length is reduced.

Therefore, $v_t^{ref} = \underline{v}^{ref}(e^{-\lambda t} - 1), \lambda > 0, \underline{v}^{ref} > 0$ is chosen and, as index to be minimised:

$$J\left(U, x_{t|t}, N_p, N_c\right) = \sum_{k=0}^{N_p-1} |\Delta r_{t+k}| F_{t+k}$$

that measures the required energy for winding the cables during the prediction interval. This second recovery sub-step ends when the cable length has reached the minimum length $\underline{r}$. The third sub-step then starts, whose purpose is taking back the kite in the position from which it has to be started again for a new traction step. Therefore,

$v_t^{ref} = -\underline{v}^{ref} e^{-\lambda t}, \lambda > 0$ is chosen and:

$$J\left(U, x_{t|t}, N_p, N_c\right) = \sum_{k=0}^{N_p-1} [(\vartheta_{t+k} - \vartheta_I)^2 + \phi_{t+k}^2]$$

This third and last sub-step ends when J has reached a "small enough" value, ending the recovery step and allowing a new traction/recovery cycle to start.

In the above mentioned second energy generation mode with circular trajectory, the "useful force" $F_t$ is the tangential component to the trajectory of the cables traction force. The electric actuators, dragged by the "carousel" 20 arm to which cables are connected, are controlled with a suitable adjusting system so that the rotation speed of the carousel 20 is constant $\dot{\alpha}=\overline{v}$ with assigned $\overline{v}>0$, and $v_t^{ref} = \overline{v} \; \forall t$ is considered. It is moreover considered that the cable length is constant. The constraint, conditions are the same for all steps, for example:

$$\vartheta_t \le \overline{\vartheta} < \pi/2$$

$$|u_t| \le \overline{u}, \quad |u_t - u_{t-1}| \le \Delta$$

The traction step with right walls starts for $\alpha = 0$ and with the kite in an assigned initial position $\vartheta = \vartheta_I$, $\phi = \phi_I$.

As cost function, in this traction step, the following is used:

$$J\left(U, x_{t|t}, N_p, N_c\right) = -\sum_{k=0}^{N_p-1} R\Delta\alpha_{t+k} F_{t+k}$$

whose minimisation brings about a maximisation of the electric energy generated during the prediction interval.

This step ends for $\alpha=\overline{\alpha}$, angle in which the kite is not able any more to provide a positive moment. Then the traction suspension step with wall change starts, that is composed of two sub-steps. In the first sub-step, the control drives the kite flight in, order to provide a minimum resistance. This is obtained by choosing as function:

$$J\left(U, x_{t|t}, N_p, N_c\right) = \sum_{k=0}^{N_p-1} R\Delta\alpha_{t+k} F_{t+k}$$

This step ends for $\alpha=\overline{\alpha}_c<\overline{\alpha}$, in which the second sub-step starts, in which the system takes the kite to position $\vartheta = \vartheta_{II}$, $\phi = \phi_{II}$, suitable for starting the following traction step with left walls. This is obtained by choosing:

$$J\left(U, x_{t|t}, N_p, N_c\right) = \sum_{k=0}^{N_p-1} [(\vartheta_{t+k} - \vartheta_{II})^2 + (\phi_{t+k} - \phi_{II})^2]$$

For $\alpha=\overline{\alpha}$ the traction step with left walls starts, in which, in order to maximise the generated energy, the same function J is used as the previous traction step. This traction step ends for $\alpha = 0$, in which the wall change occurs. In this step, the following is chosen:

$$J\left(U, x_{t|t}, N_p, N_c\right) = \sum_{k=0}^{N_p-1} [(\vartheta_{t+k} - \vartheta_I)^2 + (\phi_{t+k} - \phi_I)^2]$$

The step ends when J has reached a "small enough" value, showing that the kite position is suitable for starting a new traction step with right walls.

The classic implementation of the above procedures requires the solution to the problem of optimising the cost function J at every sampling time, such task being difficult to be performed in real time in the required sampling times (of the order of 0.1-0.2 sec.) by processing means with an acceptable cost and depending on necessary reaction times for an efficient control of the flight of a kite.

In order to advantageously solve such inconvenience, for implementing the process according to the present invention, it must be taken into account that the MPC control $u_t$ is a non-linear function of status $x_t$, namely:

$$u_t = f\left(x_t, W_t, v_{t_i}^{ref}\right) = f\left(z_t\right)$$

Function $f(z)$ is not explicitly known, but a certain number of values of $f(z)$ can be known through an off-line MPC procedure, starting from assigned values $\tilde{z}_k$, $k = 1,..., M$

The process according to the present invention therefore comprises the steps of:

- computing:

$$\tilde{u}_k = f\left(\tilde{z}_k\right), \quad k = 1,...,M$$

- from values $\tilde{z}_k, \tilde{u}_k$ $k = 1,...,M$, obtaining an approximation $\hat{f}$ of $f$. This can occur with function approximation techniques starting from a certain finite number of correspondences. Such processing can be performed in different ways (per se substantially known), for example by using neural networks. These methods however have some problems due to the fact that normally the approximating function is obtained by a non-linear optimisation algorithm, and it is not possible to know, at the end of the algorithm, whether the obtained approximation level is adequate or whether the number M of values computed out of line is enough.

In order to overcome such limitations, proceed as follows.

The following functions are defined:

$$f_u\left(z,\gamma\right) = \min_{k=1,...,M}\left(\tilde{u}_k + \gamma\|z - \tilde{z}_k\|\right)$$

$$f_l\left(z,\gamma\right) = \max_{k=1,...,M}\left(\tilde{u}_k - \gamma\|z - \tilde{z}_k\|\right)$$

The following is computed:

$$\gamma^* = \inf_{\gamma: f_u(\tilde{z}_k,\gamma)\geq\tilde{u}_k, \, k=1,...,M}\gamma$$

The estimation $\hat{f}$ of $f$ is therefore given by:

$$\hat{f}\left(z\right) = \frac{1}{2}\left[f_u\left(z,\gamma^*\right) + f_l\left(z,\gamma^*\right)\right]$$

Suppose, for simplifying, that points $\tilde{z}_k$ are chosen on a uniform grid of a rectangular region $Z$ that comprises the intervals in which variables $x$, $W$, $v^{ref}$ operate. Then, the following is obtained:

$$\lim_{M \to \infty} \left| f(z) - \hat{f}(z) \right| = 0, \quad \forall z \in Z$$

Moreover, for a given $M$, the estimation error $f(z) - \hat{f}(z)$ is limited as:

$$\left| f(z) - \hat{f}(z) \right| \leq \frac{1}{2} \left[ f_u(z, \gamma^*) - f_l(z, \gamma^*) \right], \quad \forall z \in Z$$

This allows verifying whether $\hat{f}$ provides an enough approximation of $f$ or whether a greater value of $M$ is necessary.

The MPC control can then be implemented on-line, providing that the processing and controlling means compute, depending on signals received from the system 1 periphery, the function $\hat{f}(z_t)$ at every sampling instant: $u_t = \hat{f}(z_t)$

In other words, operating in this way, it is possible to compute the above approximation by solving M off-line optimisation problems, without therefore be subjected to particular constraints, neither in terms of available processing power, nor in terms of processing time.

The thereby computed approximation can then be made available by storing in a memory associated with the processing and controlling means the approximation $\hat{f}$ pf the control law.

The processing and controlling means can then control in real time the kite flight by using the approximation $\hat{f}$ in place of the actual control law $f$.

It is wholly evident that the present invention further refers to a computer program comprising computer program code means adapted to perform all or part of the steps of the above described process when such program is run on a computer or, for example, on the processing and controlling means of the system 1 according to the present invention.

In an alternative embodiment thereof, the system and/or the process according to the present invention can find a valid application also in the sea sector, for dragging boats by exploiting the wind energy.

In such case, all components of the previously described system according to the present invention are placed on a sailing or motored boat. Different from the previously described application, the primary system objective does not consists any more in the conversion of wind energy into electric energy, but in exploiting the wind force for dragging a boat, and therefore for converting wind energy into mechanical energy.

The control system is programmed for maximising the energy that the kite is able of subtracting from the wind in order to continuously optimise the exploitation of wind currents, but avoiding that the cable load becomes excessive and damages the system components. Therefore, the power transmission does not occur any more by actuating a generator by rotating a winch, but limiting as much as possible the unwinding of cables so that the kite is always on the boat bow, to which the kite is connected through the cables themselves, and the boat moves with respect to a fixed reference system.

**Claims**

1. Automatic control process for the flight of kites (2), said kites (2) being driven by driving cables (6), being adapted to be used together with a "carousel" type system (20) and being adapted to generate energy through a periodic execution of a traction step and a recovery step performed on said kites (2), said process comprising the steps of:

   - detecting first pieces of information regarding at least a position and an orientation in space of the kites (2) and accelerations to which said kites (2) are subjected;
   - detecting second pieces of information regarding at least an amount of a tension on said driving cables (6) of said kites (2) and their relative position, a direction and an intensity of a wind current W inside which said kites (2) is immersed;
   - transforming a content of said first and second pieces of information (P) into a mechanical command related to a control function (U) for driving said kites (2) along a flight trajectory maximising an amount of kinetic energy subtracted from said wind current W; and
   - transmitting said first pieces of information to processing and controlling means (7) of said kites (2);
   **characterised in that** said automatic control process performs the control function (U) using a predictive control methodology based on a model of flight dynamics of said kites (2) starting from said pieces of information (P), said model of flight dynamics of said kites (2) being defined as:

$$x_{t+1} = g(x_t, u_t, W_t, v_t^{ref})$$

$$F_t = h(x_t, u_t),$$

and

said control function (U) expressed as $u_t = f(x_t, W_t, v_t^{ref}) = f(z_t)$ being approximated by a function $\hat{f}$ such that $u_t = \hat{f}(z_t)$,

where:

- $W_t$ is a vector of wind speed or wind current W;
- $v^{ref}_t$ is an assigned design function;
- $u_t$ is the effective control action defined at time t;
- $x_t = [\vartheta_t \; \phi_t \; r_t \; \Delta\vartheta_t \; \Delta\phi_t \; \Delta r_t \; s_t \; \Delta s_t]$ is a status vector composed, at time t, of positions and position variations of the kite (2) barycentre, expressed in spherical coordinates, and of positions and position variations in curvilinear coordinates on the movement trajectory T being taken into account; and

$F_t$ is the useful force transmitted by the cables for generating energy.

2. Process according to claim 1, **characterised in that** said control function (U) expressed as $u_t = \hat{f}(z_t)$ is computed off-line.

3. Process according to claim 1, **characterised in that** said approximated function $\hat{f}$ is estimated as:

$$\hat{f}(z) = \frac{1}{2}\left[ f_u\left(z, \gamma^*\right) + f_l\left(z, \gamma^*\right)\right]$$

where:

$$f_u(z, \gamma) = \min_{k=1,\ldots,M}\left(\widetilde{u}_k + \gamma\|z - \widetilde{z}_k\|\right)$$

$$f_l(z, \gamma) = \max_{k=1,\ldots,M}\left(\widetilde{u}_k - \gamma\|z - \widetilde{z}_k\|\right)$$

$$\gamma^* = \inf_{\gamma: f_u(\widetilde{z}_k, \gamma) \geq \widetilde{u}_k, \, k=1,\ldots,M} \gamma.$$

4. Process according to any one of claims 1 to 3, **characterised in that** it comprises the steps of:

a) defining a sampling period $\Delta t$;
b) providing a vector $W_t$;

c) providing a function $v^{ref}_t$;

d) providing a status vector $x_t = [\vartheta_t \, '\phi_t \, r_t \, \Delta\vartheta_t \, \Delta\phi_t \, \Delta r_t \, \Delta s_t]$;

e) defining constraints $Fx_{t+k} + Gu_{t+k} \le H$, $k = 0,..., N_p - 1$;

f) defining a prediction horizon $N_p$ and a control horizon such that $N_c \le N_p$;

g) minimising a cost function $J\left(U, x_{t|t}, N_p, N_c\right) = \sum_{k=0}^{N_p-1} L(x_{t+k|t}, u_{t+k|t}, W_{t+k}, v^{ref}_{t+k})$ and obtaining at least one control sequence $u_k$, $k=1,...,M$;

h) providing a sequence of values $\tilde{z}_k$, $k=1,...,M$ ;

i) computing $\tilde{u}_k = f(\tilde{z}_k)$, $k=1,...,M$ from said assigned values $\tilde{z}_k$, $k=1,...,M$ ;

j) from said $\tilde{z}_k, \tilde{u}_k$ $k=1,...,M$, obtaining said approximation $\hat{f}$ of said $f$;

k) off-line computing $u_t = \hat{f}(z_t)$ at every sampling instant $\Delta t$;

l) storing said $u_t$ in processing and controlling means (7) .

5.  Automatic control system (1) for a flight of at least one kite (2), said kite (2) being adapted to be used together with a "carousel" type system (20), said kite (2) being controlled by a driving unit (4) equipped with two winches to which said kite (2) is connected through two respective driving cables (6), said automatic control system (1) comprising:

    - first detecting means (3) on board of said kite (2) adapted to detect first pieces of information regarding at least a position and an orientation in space of said kite (2) and accelerations to which said kite (2) is subjected;
    - second detecting means (5) on the ground adapted to detect second pieces of information regarding at least an amount of a tension on said driving cables (6) of said kite (2) and their relative position, a direction and an intensity of a wind current W inside which said kite (2) is immersed;
    - processing and controlling means (7) of said first and said second pieces of information (P), adapted to transform a contents of said information (P) into a mechanical command related to a control function (U) operating on said winches of said driving unit (4) for driving said kite (2) along a flight trajectory maximising an amount of kinetic energy subtracted from said wind current W; and
    - a transmitting system of said first pieces of information to said processing and controlling means (7); **characterised in that** said processing and controlling means (7) of said automatic control system (1) are adapted to perform a process according to any one of claims 1 to 4.

6.  System (1) according to claim 5, **characterised in that** said second pieces of information deal with position and movements of said driving unit (4) along a movement trajectory thereof, said second pieces of information being adapted to be transmitted by said transmitting system to said processing and controlling means (7).

7.  System (1) according to claim 5, **characterised in that** said first detecting means (3) comprise tri-axial accelerometers, in particular of a MEMS type.

8.  System (1) according to claim 5, **characterised in that** said first detecting means (3) comprise an electronic compass, in particular a Fluxgate magnetometer.

9.  System (1) according to claim 7, **characterised in that** each one of said tri-axial accelerometers is placed on a respective end of said kite (2) next to a junction of said driving cables (6) with walls of said kite (2).

10. System (1) according to claim 5, **characterised in that** said second detecting means (5) comprise strain gauges adapted to measure a deflection of said driving cables (6).

11. System (1) according to claim 5, **characterised in that** said second detecting means (5) comprise encoders on said winches of said driving unit (4).

12. System (1) according to claim 5, **characterised in that** said second detecting means (5) comprise at least one anemometer, or at least one anemoscope, or an artificial ground viewing system.

13. System (1) according to claim 5, **characterised in that** said transmitting system is with optic fibres or wireless.

14. Computer program comprising computer program code means adapted to perform the steps of said process according to any one of claims 1 to 4 when such program is run on a computer.

**15.** Computer program according to claim 14 and contained on a computer readable medium.


**Patentansprüche**

**1.** Automatisches Kontrollverfahren des Fluges von leistungsstarken Flügelprofilen (2), die genannten leistungsstarken Flügelprofile (2) werden durch Bedienungskabel (6) geführt, die dazu dienen, zusammen mit einem "Karusselsystem" (20) verwendet zu werden und dazu dienen, Energie durch eine regelmäßige Ausführung einer Traktionsphase und einer Rückgewinnungsphase zu erzeugen, die an den genannten leistungsstarken Flügelprofilen (2) ausgeführt wird, das genannte Verfahren schließt folgende Phasen ein:

- Erste Informationen für mindestens eine Position und eine Raumausrichtung der leistungsstarken Flügelprofile (2) und Beschleunigungen zu erfassen, denen jene genannten leistungsstarken Flügelprofile (2) ausgesetzt werden;
- Zweite Informationen für mindestens eine Spannungsgröße an den genannten Bedienungskabeln (6) der genannten leistungsstarken Flügelprofile (2) und ihre entsprechende Position, eine Richtung und eine Windstromstärke W zu erfassen, in der die genannten leistungsstarken Flügelprofile (2) eingetaucht sind;
- Den Inhalt der genannten ersten und zweiten Informationen (P) in eine entsprechende mechanische Steuerung für eine Kontrollfunktion (U) umzuwandeln, um die genannten leistungsstarken Flügelprofile (2) längs einer Flugbahn zu steuern, die eine kinetische Energiemenge maximiert, welche dem genannten Windstrom W entzogen wird; und
- Die genannten ersten Informationen an Bearbeitungs- und Steuergeräte (7) der genannten leistungsstarken Flügelprofile (2) übertragen;

und ist **dadurch gekennzeichnet, dass** das genannte automatische Kontrollverfahren die Kontrollfunktion (U) durch eine prädiktive Kontrollmethodologie realisiert, die auf einem Modell der Flugdynamik der genannten Flügelprofile (2) ausgehend von den genannten Informationen (P) basiert, das genannte Modell der Flugdynamik der genannten Flügelprofile (2) wird folgendermaßen definiert:

$$x_{t+1} = g(x_t, u_t, W_t, v_t^{ref})$$

$$F_t = h(x_t, u_t),$$

und die genannte Kontrollfunktion (U), ausgedrückt als $u_t = f\left(x_t, W_t, v_t^{ref}\right) = f(z_t)$

die so von einer Funktion angenähert wird, $\hat{f}$ dass $u_t = \hat{f}(z_t)$,
wobei:

- $W_t$ ein Vektor der Windgeschwindigkeit oder des Windstroms W ist;
- $v^{ref}_t$ eine projektmäßig zugeordnete Funktion ist;
- $u_t$ die effektive Kontrollaktion ist, die mit der Zeit t definiert wird;
- $x_t = [\vartheta_t\,\phi_t\,r_t\,\Delta\vartheta_t\,\Delta\phi_t\,\Delta r_t\,s_t\,\Delta s_t]$ ein dargestellter Statusvektor zur Zeit t aus Positionen und Positionsänderungen des Schwerpunktes des Flügelprofils (2), die in sphärischen Koordinaten ausgedrückt werden, und aus Positionen und Positionsänderungen in kurvenlinearen Koordinaten an der berücksichtigten Bewegungsbahn T ist; und
- $F_t$ die nutzbare Kraft ist, die von den Kabeln für die Energieerzeugung übertragen wird.

**2.** Verfahren gemäß Patentanspruch 1, das **dadurch gekennzeichnet ist, dass** die genannte Kontrollfunktion (U), die als $u_t = \hat{f}(z_t)$ ausgedrückt wird, im Offline-Modus berechnet wird.

**3.** Verfahren gemäß Patentanspruch 1, das **dadurch gekennzeichnet ist, dass** die genannte Näherungsfunktion $\hat{f}$ folgendermaßen geschätzt wird:

$$\hat{f}(z) = \frac{1}{2}\left[ f_u\left(z,\gamma^*\right) + f_l\left(z,\gamma^*\right) \right]$$

wobei:

$$f_u(z,\gamma) = \min_{k=1,\ldots,M}\left(\widetilde{u}_k + \gamma\|z - \widetilde{z}_k\|\right)$$

$$f_l(z,\gamma) = \max_{k=1,\ldots,M}\left(\widetilde{u}_k - \gamma\|z - \widetilde{z}_k\|\right)$$
$$\gamma^* = \inf_{\gamma:\, f_u(\widetilde{z}_k,\gamma)\geq \widetilde{u}_k,\, k=1,\ldots,M}\gamma \; .$$

**4.** Verfahren gemäß einem beliebigen der Patentansprüche von 1 bis 3, das **dadurch gekennzeichnet ist, dass** es folgende Phasen einschließt:

a) Eine Bemusterungszeit $\Delta t$ definieren;
b) Einen Vektor $W_t$ liefern;

c) Eine Funktion $v^{ref}_t$ liefern;

d) Einen Statusvektor $x_t = [\vartheta_t\,\phi_t\,r_t\,\Delta\vartheta_t\,\Delta\phi_t\,\Delta r_t\,s_t\,\Delta s_t]$ liefern;
e) Bindungen $Fx_{t+k} + Gu_{t+k} \leq H$, $k = 0,\ldots, N_p$ -1 definieren;
f) Einen Prädiktionshorizont $N_p$ und einen Kontrollhorizont definieren, sodass $N_c < N_p$ ;

g) Eine Kostenfunktion $$J\left(U, x_{t|t}, N_p, N_c\right) = \sum_{k=0}^{N_p-1} L(x_{t+k|t}, u_{t+k|t}, W_{t+k}, v^{ref}_{t+k})$$

minimieren und mindestens eine Kontrollsequenz $u_k$, $k = 1, \ldots, M$ erhalten;
h) Wertsequenzen $\widetilde{z}_k$, $k = 1,\ldots, M$ liefern;
i) $\widetilde{u}k = f(\widetilde{z}_k)$, $k = 1,\ldots, M$ aus den genannten zugeordneten Werten $\widetilde{z}_k$, $k = 1, \ldots, M$ berechnen;
j) Aus diesen $\widetilde{z}_k, \widetilde{u}_k$ $k = 1,\ldots, M$ die genannte Näherung $\hat{f}$ der genannten $f$ erhalten;
k) $u_t = \hat{f}(z_t)$ im Offline-Modus zu jedem Bemusterungszeitpunkt $\Delta t$ berechnen;
l) Die genannten $u_t$ in den genannten Bearbeitungs- und Steuergeräten (7) speichern.

**5.** Automatisches Kontrollsystem (1) des Fluges von mindestens einem leistungsstarken Flügelprofil (2), das genannte leistungsstarke Flügelprofil (2) dient dazu, zusammen mit einem "Karusselsystem" (20) verwendet zu werden, das genannte leistungsstarke Flügelprofil (2) wird von einer Bedienungseinheit (4) kontrolliert, die mit zwei Winden ausgestattet ist, mit denen das genannte leistungsstarke Flügelprofil (2) durch zwei entsprechende Bedienungskabel (6) verbunden ist, das genannte automatische Kontrollsystem (1) schließt folgendes ein:

- Erste Erfassungsgeräte (3) am genannten leistungsfähigen Flügelprofil (2), die dazu dienen, die ersten Informationen für mindestens eine Position und eine Raumausrichtung des genannten leistungsstarken Flügelprofils (2) und die Beschleunigungen, denen das genannte leistungsstarke Flügelprofil (2) ausgesetzt wird, zu erfassen;
- Zweite Erfassungsgeräte (5) am Boden, die dazu dienen, zweite Informationen für mindestens eine Spannungsgröße an den genannten Bedienungskabeln (6) des genannten leistungsstarken Flügelprofils (2) und seine entsprechende Position, eine Richtung und eine Windstromstärke W zu erfassen, in der das genannte leistungsstarke Flügelprofil (2) eingetaucht ist;
- Bearbeitungs- und Steuergeräte (7) der genannten ersten und zweiten Informationen (P), die dazu dienen, den Inhalt der genannten Informationen (P) in eine mechanische Steuerung für eine Kontrollfunktion (U) umzuwandeln, die auf die genannten Winden der genannten Bedienungseinheit (4) einwirkt, um das genannte leistungsstarke Flügelprofil (2) längs einer Flugbahn zu steuern, die eine kinetische Energiemenge maximiert, welche dem genannten Windstrom W entzogen wird; und

- Ein Übertragungssystem der genannten ersten Informationen an die genannten Bearbeitungs- und Steuergeräte (7);

und ist **dadurch gekennzeichnet, dass** die genannten Bearbeitungs- und Steuergeräte (7) des genannten automatischen Steuersystems (1) dazu dienen, ein Verfahren gemäß einem beliebigen der Patentansprüche von 1 bis 4 auszuführen.

6. System (1) gemäß Patentanspruch 5, das **dadurch gekennzeichnet ist, dass** die genannten zweiten Informationen Position und Verschiebungen der genannten Bedienungseinheit (4) längs ihrer Bewegungsbahn betreffen, die genannten zweiten Informationen dienen dazu, vom genannten Übertragungssystem an die genannten Bearbeitungs- und Steuergeräte (7) übertragen zu werden.

7. System (1) gemäß Patentanspruch 5, das **dadurch gekennzeichnet ist, dass** die genannten ersten Erfassungsgeräte (3) dreiachsige Beschleunigungsmesser insbesondere MEMS enthalten.

8. System (1) gemäß Patentanspruch 5, das **dadurch gekennzeichnet ist, dass** die genannten ersten Erfassungsgeräte (3) einen Erdinduktor insbesondere ein Magnetometer Fluxgate enthalten.

9. System (1) gemäß Patentanspruch 7, das **dadurch gekennzeichnet ist, dass** jeder der beiden genannten dreiachsigen Beschleunigungsmesser am entsprechenden Endstück des genannten Flügelprofils (2) an einer Verbindung der beiden genannten Bedienungskabel (6) mit den Wänden des genannten Flügelprofils (2) angebracht ist.

10. System (1) gemäß Patentanspruch 5, das **dadurch gekennzeichnet ist, dass** die genannten zweiten Erfassungsgeräte (5) Dehnungsmessstreifen enthalten, die dazu dienen, eine Ablenkung der genannten Bedienungskabel (6) zu messen.

11. System (1) gemäß Patentanspruch 5, das **dadurch gekennzeichnet ist, dass** die genannten zweiten Erfassungsgeräte (5) Encoder an den genannten Winden der genannten Bedienungseinheit (4) enthalten.

12. System (1) gemäß Patentanspruch 5, das **dadurch gekennzeichnet ist, dass** die genannten zweiten Erfassungsgeräte (5) mindestens ein Anemometer oder mindestens ein Anemoskop oder ein künstliches Sichtsystem am Boden enthalten.

13. System (1) gemäß Patentanspruch 5, das **dadurch gekennzeichnet ist, dass** das genannte Übertragungssystem ein Optikfaser- oder drahtloses System ist.

14. Computerprogramm mit Codevorrichtungen eines Computerprogramms, die dazu dienen, die Phasen des genannten Verfahrens gemäß einem beliebigen der Patentansprüche von 1 bis 4 auszuführen, wenn ein solches Programm auf einem Computer ausgeführt wird.

15. Computerprogramm gemäß Patentanspruch 14 und Inhalt auf einem von einem Computer lesbaren Träger.


**Revendications**

1. Procédure de contrôle-automatique du vol des cerfs-volants éoliens (2) ; ces cerfs-volants éoliens (2), qui sont guidés par des câbles de manoeuvre (6), sont appropriés pour être utilisés dans un système « à carrousel » (20) et pour produire de l'énergie à travers l'exécution périodique d'une phase de traction et d'une phase de récupération exécutées sur ces cerfs-volants éoliens (2) ; la procédure de contrôle comprend les phases suivantes :

- prise des premières informations concernant au moins une position et une orientation dans l'espace des cerfs-volants éoliens (2) et des accélérations auxquelles les cerfs-volants éoliens (2) sont soumis ;
- prises de secondes informations concernant au moins une valeur de tension sur les câbles de manoeuvre (6) des cerfs-volants éoliens (2) et leur position relative, une direction et une intensité d'un courant éolien W à l'intérieur duquel se trouvent les cerfs-volants éoliens (2) ;
- transformer le contenu des premières et des secondes informations (P) en une commande mécanique relative à une fonction de contrôle (U) pour manoeuvrer les cerfs-volants éoliens (2) le long d'une trajectoire de vol qui maximise une quantité d'énergie cinétique soustraite au courant éolien W ; et
- transmettre aux dispositifs d'élaboration et de contrôle (7) les premières informations sur ces cerfs-volants éoliens (2) ;
où cette procédure de contrôle automatique exécute la fonction de contrôle (U) à travers une méthodologie de contrôle prédictif basée sur un modèle de la dynamique de vol des cerfs-volants éoliens (2) à partir des informations (P) susmentionnées ; le modèle de la dynamique de vol des cerfs-volants éoliens (2) est défini comme suit :

$$x_{t+1} = g(x_t, u_t, W_t, v_t^{ref})$$

$$F_t = h(x_t, u_t),$$

et

la fonction de contrôle (U) exprimée comme $u_t = f\left(x_t, W_t, v_t^{ref}\right) = f(z_t)$ est approximée par une fonction $\hat{f}$ telle que $u_t \approx \hat{f}(z_t)$,

où :

- $W_t$ est un vecteur de la vitesse du vent ou du courant éolien W ;

- $v^{ref}_t$ est une fonction de projet assignée ;

- $u_t$ est l'action de contrôle effective définie selon le temps t ;
- $x_t = [\vartheta_t\, \phi_t\, r_t\, \Delta\vartheta_t\, \Delta\phi_t\, \Delta r_t\, s_t\, \Delta s_t]$ est un vecteur d'état composé, selon le temps t, des positions et des variations de positions du barycentre du cerf-volant éolien (2), exprimées en coordonnées sphériques ainsi que des positions et des variations de position exprimées en coordonnées curvilignes sur la trajectoire de mouvement T considérée ; et
- $F_t$ est la force utile transmise par les câbles pour engendrer l'énergie.

2. Procédure, selon la revendication 1, où la fonction de contrôle (U) exprimée comme $u_t = \hat{f}(z_t)$ est calculée en mode off-line.

3. Procédure, selon la revendication 1, où la fonction approximée $\hat{f}$ est évaluée comme suit :

$$\hat{f}(z) = \frac{1}{2}\Big[ f_u\big(z, \gamma^*\big) + f_l\big(z, \gamma^*\big) \Big]$$

où :

$$f_u(z, \gamma) = \min_{k=1,\ldots,M} \big(\widetilde{u}_k + \gamma\|z - \widetilde{z}_k\|\big)$$

$$f_l(z, \gamma) = \max_{k=1,\ldots,M} \big(\widetilde{u}_k - \gamma\|z - \widetilde{z}_k\|\big)$$
$$\gamma^* = \inf_{\gamma : f_u(\tilde{z}_k, \gamma) \geq \tilde{u}_k,\ k=1,\ldots,M} \gamma.$$

4. Procédure, selon l'une des revendications de 1 à 3, comprenant les phases suivantes :

a) définir une période d'échantillonnage $\Delta t$ ;

b) fournir un vecteur $W_t$ ;

c) fournir une fonction $v^{ref}_t$ ;

d) fournir un vecteur d'état $x_t = [\vartheta_t\ \phi_t\ r_t\ \Delta\vartheta_t\ \Delta\phi_t\ \Delta r_t\ s_t\ \Delta s_t]$;

e) définir des contraintes $Fx_t+k + Gu_{t+k} \leq H, k = 0,..., N_p -1$;

f) définir un horizon de prévision $N_p$ et un horizon de contrôle de sorte que $N_c \leq N_p$ ;

g) réduire au minimum une fonction de coût $J\left(U, x_{t|t}, N_p, N_c\right) = \sum_{k=0}^{N_p-1} L(x_{t+k|t}, u_{t+k|t}, W_{t+k}, v^{ref}_{t+k})$ et obtenir au moins une séquence de contrôle $u_k, k=1, ...,M$;

h) fournir une séquence de valeur $\tilde{z}_k, k =1, ..., M$ ;

i) calculer $\hat{u}_k = f(\tilde{z}_k), k = 1,...,M$ à partir des valeurs assignées $\tilde{z}_k, k=1,...,M$;

j) à partir des valeurs $\tilde{z}_k, \tilde{u}_k\ k = 1,...,M$, obtenir l'approximation $\hat{f}$ de la fonction susmentionnée $f$ ;

k) calculer $u_t = \hat{f}(z_t)$ en mode off-line lors de chaque échantillonnage $\Delta t$ ;

l) enregistrer les valeurs $u_t$ sur les dispositifs d'élaboration et de contrôle (7).

5. Système (1) de contrôle automatique du vol d'au moins un cerf-volant éolien (2) ; le cerf-volant éolien (2) est approprié pour être utilisé dans un système « à carrousel » (20) et il est contrôlé par une unité de manoeuvre (4) dotée de deux treuils auxquels le cerf-volant éolien (2) est relié par deux câbles de manoeuvre respectifs (6) ; ce système de contrôle automatique (1) comprend :

   - les premiers dispositifs de détection (3) placés sur le cerf-volant éolien (2) servant à relever les premières informations concernant au moins une position et une orientation dans l'espace du cerf-volant éolien (2) ainsi que les accélérations auxquelles le cerf-volant éolien (2) est soumis ;
   - les seconds dispositifs de détection (5) à terre servant à relever les informations concernant au moins une valeur de tension sur les câbles de manoeuvre (6) du cerf-volant éolien (2) et leur position relative, une direction et une intensité d'un courant éolien W à l'intérieur duquel se trouve le cerf-volant éolien (2) ;
   - dispositifs d'élaboration et de contrôle (7) des premières et secondes informations (P) permettant de transformer le contenu des informations (P) en une commande mécanique relative à une fonction de contrôle (U) qui agit sur les treuils de l'unité de manoeuvre (4) pour manoeuvrer le cerf-volant éolien (2) le long d'une trajectoire de vol qui maximise une quantité d'énergie cinétique soustraite au courant éolien W ; et
   - un système de transmission des premières informations aux dispositifs d'élaboration et de contrôle (7) ;
   où les dispositifs d'élaboration et de contrôle (7) du système de contrôle automatique (1) permettent d'exécuter une procédure selon l'une des revendications de 1 à 4.

6. Système (1), selon la revendication 5, où les secondes informations concernent la position et les déplacements de l'unité de manoeuvre (4) le long de sa trajectoire de mouvement, ces secondes informations sont transmises par le système de transmission aux dispositifs d'élaboration et de contrôle (7).

7. Système (1), selon la revendication 5, où les premiers dispositifs de détection (3) comprennent des accéléromètres triaxiaux, notamment de type MEMS.

8. Système (1), selon la revendication 5, où les premiers dispositifs de détection (3) comprennent une boussole électronique, notamment un magnétomètre Fluxgate.

9. Système (1), selon la revendication 7, où les deux accéléromètres triaxiaux sont placés chacun à l'extrémité relative du cerf-volant éolien (2) à l'endroit où les câbles de manoeuvre (6) rencontrent les parois du cerf-volant éolien (2).

10. Système (1), selon la revendication 5, où les seconds dispositifs de détection (5) comprennent des jauges de déformation servant à mesurer la contrainte de flexion des câbles de manoeuvre (6).

11. Système (1), selon la revendication 5, où les seconds dispositifs de détection (5) comprennent des encodeurs sur les treuils de l'unité de manoeuvre (4).

12. Système (1), selon la revendication 5, où les seconds dispositifs de détection (5) comprennent au moins un anémomètre, ou au moins un anémoscope, ou bien un système de vision artificielle à terre.

13. Système (1), selon la revendication 5, où le système de transmission est à fibre optique ou bien sans fil.

14. Programme d'ordinateur comprenant les codes de programme permettant d'exécuter les phases de la procédure de contrôle selon l'une des revendications de 1 à 4 quand ce programme est exécuté sur un ordinateur.

15. Programme d'ordinateur selon la revendication 14 enregistré sur un support pouvant être lu par l'ordinateur.

EP 2 021 624 B1

FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT TO20030945 A
- EP 04028646 A
- US 6254034 B1
- US 2002040948 A1
- US 5931416 A
- GB 2098951 A
- US 5056447 A
- US 5435259 A

- WO 03097448 A
- US 2004035345 A
- US 2004200396 A
- WO 2005100147 A
- WO 2005100148 A
- WO 2005100149 A
- DE 102004018814 A
- IT TO20030094 A